# EUROPEAN PATENT APPLICATION

(11) **EP 4 360 822 A1**
(43) Date of publication of application: **01.05.2024**
(21) Application number: 23205367.8
(22) Date of filing: 23.10.2023
(51) Int. Cl.: B25J 9/16

(54) **ROBOT SYSTEM AND SETTING METHOD FOR ROBOT SYSTEM**

(30) Priority: 27.10.2022 JP 2022172120
(71) Applicant: Seiko Epson Corporation, Tokyo 160-8801 (JP)
(72) Inventor: TSUJI, Keiichi, Suwa-shi, Nagano, 392-8502 (JP); YAMADA, Yoshihito, Suwa-shi, Nagano, 392-8502 (JP); YAMAGISHI, Ryuya, Suwa-shi, Nagano, 392-8502 (JP); KOBAYASHI, Yoshikuni, Suwa-shi, Nagano, 392-8502 (JP); TANABE, Akira, Suwa-shi, Nagano, 392-8502 (JP)
(74) Representative: MERH-IP Matias Erny Reichl Hoffmann Patentanwälte PartG mbB

(57) **Abstract**

A robot system includes: a robot control unit that controls an operation of a robot, using a control parameter for the robot; a safety monitoring unit that monitors the operation of the robot, using a safety monitoring parameter for the robot; a control parameter setting unit that sets the control parameter to the robot control unit; and a safety monitoring parameter setting unit that acquires the control parameter set to the robot control unit, from the robot control unit, and sets at least one of a plurality of parameters included in the acquired control parameter, as the safety monitoring parameter to the safety monitoring unit.

## Description

The present application is based on, and claims priority from JP Application Serial Number 2022-172120, filed October 27, 2022, the disclosure of which is hereby incorporated by reference herein in its entirety.

### BACKGROUND

### 1. Technical Field

The present disclosure relates to a robot system and a setting method for a robot system.

### 2. Related Art

In order to increase the safety of a robot, a safety controller that monitors the operation of the robot may be provided in addition to a drive controller that controls the drive of the robot so that the robot can be safely stopped even when some trouble occurs in the robot. In such a case, when the safety controller detects an abnormality or trouble in the robot, the robot is forced to make an emergency stop regardless of whether a command is given by the drive controller or not and regardless of the content of a command if any.

JP-A-2006-302229 describes a setting method for normally activating the safety controller. This setting method includes: creating configuration data, for example, setting a robot parameter or creating a program, using a personal computer; downloading the created configuration data to the safety controller; uploading the configuration data downloaded to the safety controller, to the personal computer again; and comparing the configuration data before and after the download. When the configuration data before and after the download are identical, it is determined that the configuration data is normally downloaded to the safety controller.

However, in the setting method of JP-A-2006-302229, the setting of the robot parameter to the drive controller and the setting of the robot parameter to the safety controller are performed separately. Therefore, there is a problem in that safety monitoring cannot be properly performed due to an inability to secure the identicality of the robot parameter between the drive controller and the safety controller.

### SUMMARY

According to an aspect of the present disclosure, a robot system includes: a robot control unit that controls an operation of a robot, using a control parameter for the robot; a safety monitoring unit that monitors the operation of the robot, using a safety monitoring parameter for the robot; a control parameter setting unit that sets the control parameter to the robot control unit; and a safety monitoring parameter setting unit that acquires the control parameter set to the robot control unit, from the robot control unit, and sets at least one of a plurality of parameters included in the acquired control parameter, as the safety monitoring parameter to the safety monitoring unit.

According to another aspect of the present disclosure, a setting method for a robot system is provided. The robot system includes: a robot control unit that controls an operation of a robot, using a control parameter for the robot; a safety monitoring unit that monitors the operation of the robot, using a safety monitoring parameter for the robot; a control parameter setting unit that sets the control parameter to the robot control unit; and a safety monitoring parameter setting unit that sets the safety monitoring parameter to the safety monitoring unit. The setting method includes: a control parameter setting step of setting the control parameter to the robot control unit; a control parameter acquisition step of acquiring the control parameter set to the robot control unit, from the robot control unit; and a safety monitoring parameter setting step of setting at least one of a plurality of parameters included in the acquired control parameter, as the safety monitoring parameter to the safety monitoring unit.

### BRIEF DESCRIPTION OF THE DRAWINGS

FIG. 1 shows the configuration of a robot system according to a preferred embodiment.
FIG. 2 is a flowchart showing a method for setting a control parameter and a safety monitoring parameter.
FIG. 3 is a flowchart showing the method for setting the control parameter and the safety monitoring parameter.
FIG. 4 shows the configuration of a modification example of the robot system shown in FIG. 1.

### DESCRIPTION OF EMBODIMENTS

The robot system and the setting method for the robot system according to the present disclosure will now be described in detail, based on an embodiment shown in the accompanying drawings.

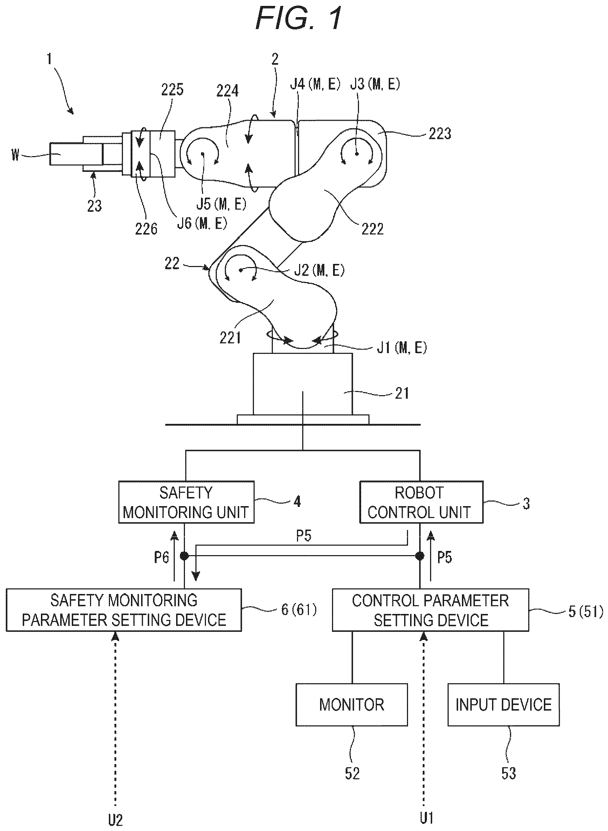

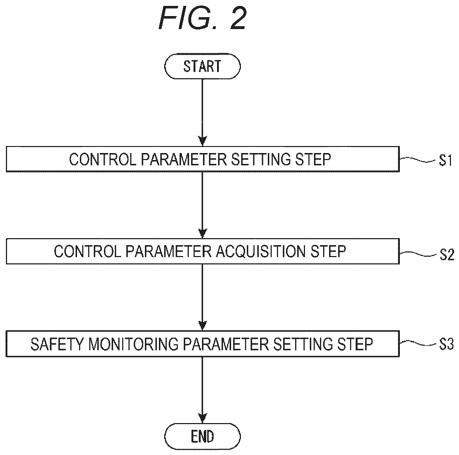

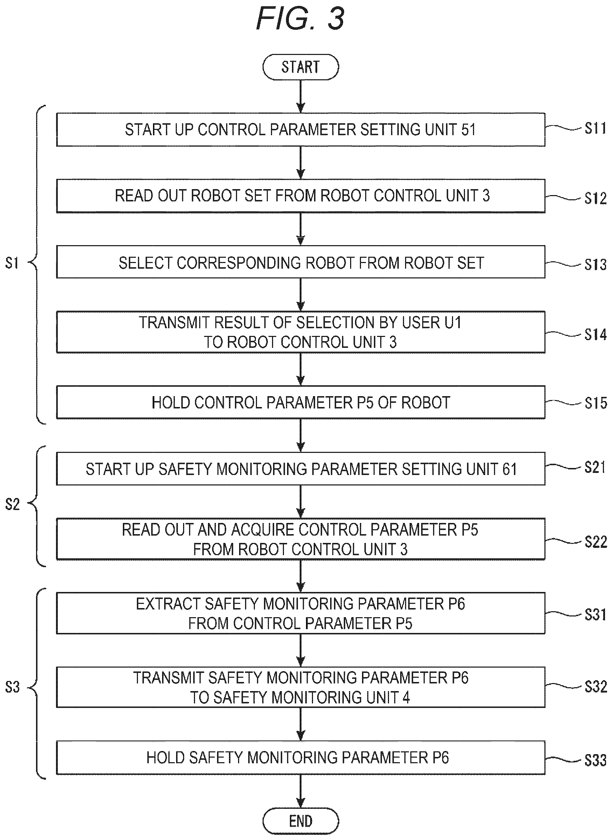

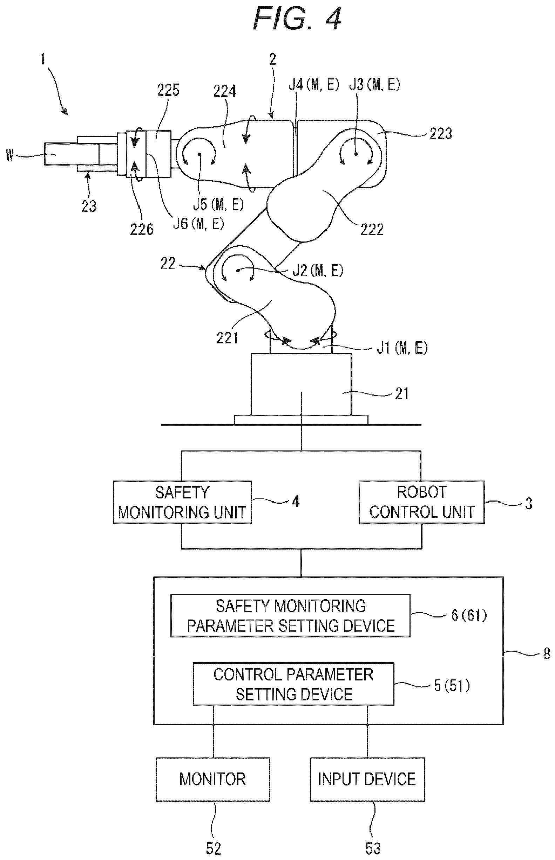

FIG. 1 shows the configuration of a robot system according to a preferred embodiment. FIGS. 2 and 3 are flowcharts showing a method for setting a control parameter and a safety monitoring parameter. FIG. 4 shows the configuration of a modification example of the robot system shown in FIG. 1.

A robot system 1 shown in FIG. 1 has a robot 2, a robot control unit 3 that controls the drive of the robot 2, a safety monitoring unit 4 that monitors the drive of the robot 2, a control parameter setting device 5 as a first device that sets a control parameter to the robot control unit 3, and a safety monitoring parameter setting device 6 as a second device that sets a safety monitoring parameter to the safety monitoring unit 4.

The robot 2 is a six-axis vertical articulated robot having six drive shafts. The robot 2 has a base 21, a robot arm 22 coupled to the base 21 in a rotationally movable manner, and a tool 23 installed at the distal end of the robot arm 22.

The robot arm 22 is a robotic arm having six arms 221, 222, 223, 224, 225, 226 coupled in a rotationally movable manner and has six joints J1, J2, J3, J4, J5, J6. Of these six joints J1 to J6, the joints J2, J3, J5 are bending joints and the joints J1, J4, J6 are torsion joints.

Each of the joints J1, J2, J3, J4, J5, J6 is equipped with a motor M and an encoder E. The robot control unit 3 executes feedback control such that the angle of rotation of the joints J1 to J6 indicated by an output from the encoder E coincides with a target position for each of the joints J1 to J6, while the robot system 1 is in operation.

The tool 23 is a hand that holds a workpiece W. However, the configuration of the tool 23 is not particularly limited. A suitable configuration can be selected according to the target task.

The robot 2 has been described above. However, the configuration of the robot 2 is not particularly limited. For example, a SCARA robot (horizontal articulated robot), a dual-arm robot having two of the foregoing robot arms 22, or the like, may be employed. Also, a self-propelled robot having the base 21 that is not fixed may be employed.

The robot control unit 3 controls the drive of the robot 2, for example, based on an operation command from a host computer, not illustrated.

The robot control unit 3 is formed of a computer, for example, and has a processor that processes information, a memory communicatively coupled to the processor, and an external interface that implements coupling with an external device. Various programs executable by the processor are saved in the memory. The processor can read and execute the various programs or the like stored in the memory. In this embodiment, a robot set having a control parameter P5 for a plurality of types of robots is stored in the robot control unit 3 in advance. Thus, the robot control unit 3 can be applied to a plurality of types of robots and therefore achieves high versatility.

The safety monitoring unit 4 monitors the drive of the robot 2 by the robot control unit 3. When an abnormality or trouble in the robot 2 is detected, the safety monitoring unit 4 switches the drive of the robot 2 to a safety mode and controls the drive, regardless of whether an operation command is given by the robot control unit 3 or not and regardless of the content of an operation command if any. The safety mode is not particularly limited. For example, a speed limit mode where the speed of the distal end of the robot arm 22 is monitored and where the robot 2 is forced to make an emergency stop when the speed exceeds a threshold, or a position limit mode where the position of the distal end of the robot arm 22 is monitored and where the robot 2 is forced to make an emergency stop when the position goes out of a designated area, or the like, may be employed.

The safety monitoring unit 4 is formed of a computer, for example, and has a processor that processes information, a memory communicatively coupled to the processor, and an external interface that implements coupling with an external device. Various programs executable by the processor are saved in the memory. The processor can read and execute the various programs or the like stored in the memory.

The control parameter setting device 5 has a control parameter setting unit 51 that sets the control parameter P5 to the robot control unit 3. The control parameter setting unit 51 is, for example, a program installed in the control parameter setting device 5. The control parameter P5 is a necessary parameter to control the drive of the robot 2 and varies depending on the configuration of the robot 2. For example, the length of each of the arms 221 to 226, the amount of offset of each of the joints J1 to J6, or the amount of correction to the software origin (correction pulse value) or the like may be employed.

The control parameter setting device 5 is formed of a computer, for example, and has a processor that processes information, a memory communicatively coupled to the processor, and an external interface that implements coupling with an external device. Various programs executable by the processor are saved in the memory. The processor can read the various programs or the like stored in the memory and thus can start up the control parameter setting unit 51.

A monitor 52 that displays an image such as a graphic user interface, and an input device 53 having a keyboard, a mouse or the like, are coupled to the control parameter setting device 5. The user can input necessary information, using the input device 53, while checking the image displayed on the monitor 52.

The safety monitoring parameter setting device 6 has a safety monitoring parameter setting unit 61 that sets a safety monitoring parameter P6 to the safety monitoring unit 4. The safety monitoring parameter setting unit 61 is, for example, a program installed in the safety monitoring parameter setting device 6. The safety monitoring parameter P6 is a necessary parameter to monitor the safety of the robot 2 and varies depending on the configuration of the robot 2 and the content of the monitoring. For example, the length of each of the arms 221 to 226, the amount of offset of each of the joints J1 to J6, or the amount of correction to the software origin (correction pulse value) or the like may be employed. In this way, the safety monitoring parameter P6 includes the same parameter as the control parameter P5.

The safety monitoring parameter setting device 6 is formed of a computer, for example, and has a processor that processes information, a memory communicatively coupled to the processor, and an external interface that implements coupling with an external device. Various programs executable by the processor are saved in the memory. The processor can read the various programs or the like stored in the memory and thus can start up the safety monitoring parameter setting unit 61.

The configuration of the robot system 1 has been briefly described above. Next, a setting method for the robot system 1 will be described. As shown in FIGS. 2 and 3, the setting method for the robot system 1 includes: a control parameter setting step S1 of setting the control parameter P5 to the robot control unit 3; a control parameter acquisition step S2 of acquiring the control parameter P5 set to the robot control unit 3, from the robot control unit 3; and a safety monitoring parameter setting step S3 of setting at least one of a plurality of parameters included in the acquired control parameter P5, as the safety monitoring parameter P6 to the safety monitoring unit 4.

### Control Parameter Setting Step S1

As shown in FIG. 3, first, a user U1 in step S11 starts up the control parameter setting unit 51. As the control parameter setting unit 51 is started up, the control parameter setting unit 51 in step S12 reads out a robot set from the robot control unit 3 and displays the robot set on the monitor 52. In response to this, the user U1 in step S13 selects a corresponding robot from the robot set. Next, the control parameter setting unit 51 in step S14 transmits the result of the selection by the user U1 to the robot control unit 3. That is, the control parameter setting unit 51 transmits the robot selected by the user U1 to the robot control unit 3. Next, the robot control unit 3 in step S15 holds the control parameter P5 of the robot transmitted from the control parameter setting unit 51. The setting of the control parameter P5 to the robot control unit 3 is thus completed.

The robot control unit 3 controls the drive of the robot 2, using the control parameter P5 set in this way. Specifically, the robot control unit 3 detects the speed of movement, position, and attitude or the like of the tool 23, based on the control parameter P5 and an output from each encoder E, feeds back the result of the detection, and thus controls the drive of the robot 2.

However, the method for setting the control parameter P5 is not particularly limited. For example, while the robot set is stored in advance in the robot control unit 3 in this embodiment, this is not limiting. The robot set may be stored, for example, in a server connected via the internet and may be downloaded from the server when necessary. Also, there may be no robot set and the user U1 may make a direct input using the input device 53.

### Control Parameter Acquisition Step S2

First, a user U2 in step S21 starts up the safety monitoring parameter setting unit 61. Next, the safety monitoring parameter setting unit 61 in step S22 reads out and acquires the control parameter P5 set in the control parameter setting step S1, from the robot control unit 3.

### Safety Monitoring Parameter Setting Step S3

Next, the safety monitoring parameter setting unit 61 in step S31 extracts a parameter that can be used as the safety monitoring parameter P6 from a plurality of parameters included in the control parameter P5 acquired in the control parameter acquisition step S2. At this point, the safety monitoring parameter setting unit 61 may extract all of the parameters included in the control parameter P5 or may extract a part of the parameters. Next, the safety monitoring parameter setting unit 61 in step S32 transmits the safety monitoring parameter P6 extracted from the control parameter P5, to the safety monitoring unit 4. Next, the safety monitoring unit 4 in step S33 holds the safety monitoring parameter P6 transmitted from the safety monitoring parameter setting unit 61. The setting of the safety monitoring parameter P6 to the safety monitoring unit 4 is thus completed.

The safety monitoring unit 4 monitors the drive of the robot 2, using the safety monitoring parameter P6 set in this way. Specifically, the safety monitoring unit 4 detects the speed of movement, position, and attitude or the like of the tool 23, based on the safety monitoring parameter P6 and an output from each encoder E, and detects an abnormality or trouble in the robot 2, based on the result of the detection and a comparison with an operation command. When an abnormality or trouble in the robot 2 is detected, the safety monitoring unit 4 switches the drive of the robot 2 to the safety mode and thus controls the drive, regardless of whether an operation command is given by the robot control unit 3 or not and regardless of the content of an operation command if any. Thus, the safety of the robot 2 is improved.

To change the control parameter P5, first, the user U1 selects a corresponding robot from the robot set displayed on the monitor 52. Next, the control parameter setting unit 51 transmits the robot selected by the user U1 to the robot control unit 3. Next, the robot control unit 3 holds a new control parameter P5 of the robot transmitted from the control parameter setting unit 51. The change of the control parameter P5 to the robot control unit 3 is thus completed. Next, the safety monitoring parameter setting unit 61 reads out and acquires the newly set control parameter P5 from the robot control unit 3. Next, the safety monitoring parameter setting unit 61 extracts a parameter that can be used as a new safety monitoring parameter P6 from a plurality of parameters included in the newly acquired control parameter P5. Next, the safety monitoring parameter setting unit 61 transmits the new safety monitoring parameter P6 to the safety monitoring unit 4. Next, the safety monitoring unit 4 holds the new safety monitoring parameter P6 transmitted from the safety monitoring parameter setting unit 61. The change of the safety monitoring parameter P6 to the safety monitoring unit 4 is thus completed.

According to such a setting method for the robot system 1, the safety monitoring parameter P6 is set to the safety monitoring unit 4, using the control parameter P5 set to the robot control unit 3. Thus, the identicality of parameter between the control parameter P5 and the safety monitoring parameter P6 can be secured. Therefore, the safety monitoring unit 4 can properly monitor the safety of the robot 2. Also, since the user U2 need not input and set the safety monitoring parameter P6, the burden on the user U2 can be reduced.

Particularly in this embodiment, the control parameter setting device 5 has the control parameter setting unit 51, and the safety monitoring parameter setting device 6 has the safety monitoring parameter setting unit 61. That is, the control parameter setting unit 51 and the safety monitoring parameter setting unit 61 are installed in separate devices. Generally, the control parameter setting device 5 is operated by the user U1 such as a system engineer creating the operation program of the robot 2, and the safety monitoring parameter setting device 6 is operated by the user U2 such as a functional safety manager monitoring the operation of the robot 2 on site. Therefore, the control parameter setting device 5 and the safety monitoring parameter setting device 6 are used at different places. In this embodiment, since the control parameter setting unit 51 and the safety monitoring parameter setting unit 61 can be installed at separate places, the control parameter setting unit 51 and the safety monitoring parameter setting unit 61 can be arranged at preferable places, respectively.

Also, in this embodiment, a first access right to the control parameter setting unit 51 and a second access right to the safety monitoring parameter setting unit 61 are different from each other. Specifically, only the user U1 of the users U1, U2 can access (log in to) the control parameter setting unit 51. That is, only the user U1 has the first access right. Meanwhile, only the user U2 of the users U1, U2 can access (log in to) the safety monitoring parameter setting unit 61. That is, only the user U2 has the second access right. Thus, a person who is not the user U1, particularly, a person who has little knowledge of the control parameter P5, can be restrained from making an unintended access to the control parameter setting unit 51, and a setting error or an unintended change or the like of the control parameter P5 can be effectively prevented. Similarly, a person who is not the user U2, particularly, a person who has little knowledge of the safety monitoring parameter P6, can be restrained from making an unintended access to the safety monitoring parameter setting unit 61, and a setting error or an unintended change or the like of the safety monitoring parameter P6 can be effectively prevented.

The robot system 1 has been described above. As described above, such a robot system 1 has: the robot control unit 3 controlling the operation of the robot 2, using the control parameter P5 for the robot 2; the safety monitoring unit 4 monitoring the operation of the robot 2, using the safety monitoring parameter P6 for the robot 2; the control parameter setting unit 51 setting the control parameter P5 to the robot control unit 3; and the safety monitoring parameter setting unit 61 acquiring the control parameter P5 set to the robot control unit 3, from the robot control unit 3, and setting at least one of a plurality of parameters included in the acquired control parameter P5, as the safety monitoring parameter P6 to the safety monitoring unit 4. Thus, the safety monitoring parameter P6 can be set to the safety monitoring unit 4, using the control parameter P5 set to the robot control unit 3. Therefore, the identicality of parameter can be secured between the control parameter P5 and the safety monitoring parameter P6. Therefore, the safety monitoring unit 4 can properly monitor the safety of the robot 2. Also, since the user U2 need not input and set the safety monitoring parameter P6, the burden on the user U2 can be reduced.

Also, as described above, the control parameter setting device 5 as the first device having the control parameter setting unit 51, and the safety monitoring parameter setting device 6 as the second device having the safety monitoring parameter setting unit 61, are provided. Thus, since the control parameter setting unit 51 and the safety monitoring parameter setting unit 61 can be installed at separate places, the control parameter setting unit 51 and the safety monitoring parameter setting unit 61 can be arranged at preferable places, respectively.

Also, as described above, the first access right to use the control parameter setting unit 51 and the second access right to use the safety monitoring parameter setting unit 61 are different from each other. Thus, a person who has little knowledge of the control parameter P5 can be restrained from making an unintended access to the control parameter setting unit 51, and a setting error or an unintended change or the like of the control parameter P5 can be effectively prevented. Similarly, a person who has little knowledge of the safety monitoring parameter P6 can be restrained from making an unintended access to the safety monitoring parameter setting unit 61, and a setting error or an unintended change or the like of the safety monitoring parameter P6 can be effectively prevented.

Also, as described above, the setting method for the robot system 1 is provided. The robot system 1 includes: the robot control unit 3 controlling the operation of the robot 2, using the control parameter P5 for the robot 2; the safety monitoring unit 4 monitoring the operation of the robot 2, using the safety monitoring parameter P6 for the robot 2; the control parameter setting unit 51 setting the control parameter P5 to the robot control unit 3; and the safety monitoring parameter setting unit 61 setting the safety monitoring parameter P6 to the safety monitoring unit 4. The setting method includes: the control parameter setting step S1 of setting the control parameter P5 to the robot control unit 3; the control parameter acquisition step S2 of acquiring the control parameter P5 set to the robot control unit 3, from the robot control unit 3; and the safety monitoring parameter setting step S3 of setting at least one of a plurality of parameters included in the acquired control parameter P5, as the safety monitoring parameter P6 to the safety monitoring unit 4. Thus, the safety monitoring parameter P6 can be set to the safety monitoring unit 4, using the control parameter P5 set to the robot control unit 3. Therefore, the identicality of parameter can be secured between the control parameter P5 and the safety monitoring parameter P6. Therefore, the safety monitoring unit 4 can properly monitor the safety of the robot 2. Also, since the user U2 need not input and set the safety monitoring parameter P6, the burden on the user U2 can be reduced.

The robot system and the setting method for the robot system according to the present disclosure have been described above, based on the illustrated embodiment. However, the present disclosure is not limited to this embodiment. The configuration of each part can be replaced with any configuration having a similar function. Also, any other component may be added to the present disclosure. A process for any purpose may be added as well.

While the control parameter setting unit 51 and the safety monitoring parameter setting unit 61 are provided in separate devices in the foregoing embodiment, this is not limiting. Both these units may be provided in a same device 8, as shown in FIG. 4.

## Claims

1. A robot system comprising:
a robot control unit that controls an operation of a robot, using a control parameter for the robot;
a safety monitoring unit that monitors the operation of the robot, using a safety monitoring parameter for the robot;
a control parameter setting unit that sets the control parameter to the robot control unit; and
a safety monitoring parameter setting unit that acquires the control parameter set to the robot control unit, from the robot control unit, and sets at least one of a plurality of parameters included in the acquired control parameter, as the safety monitoring parameter to the safety monitoring unit.

2. The robot system according to claim 1, further comprising:
a first device having the control parameter setting unit; and
a second device having the safety monitoring parameter setting unit.

3. The robot system according to claim 1, wherein
a first access right to use the control parameter setting unit and a second access right to use the safety monitoring parameter setting unit are different from each other.

4. A setting method for a robot system, the robot system comprising: a robot control unit that controls an operation of a robot, using a control parameter for the robot; a safety monitoring unit that monitors the operation of the robot, using a safety monitoring parameter for the robot; a control parameter setting unit that sets the control parameter to the robot control unit; and a safety monitoring parameter setting unit that sets the safety monitoring parameter to the safety monitoring unit, the setting method comprising:
a control parameter setting step of setting the control parameter to the robot control unit;
a control parameter acquisition step of acquiring the control parameter set to the robot control unit, from the robot control unit; and
a safety monitoring parameter setting step of setting at least one of a plurality of parameters included in the acquired control parameter, as the safety monitoring parameter to the safety monitoring unit.
